Europäisches Patentamt

European Patent Office

Office européen des brevets

(19)

(11) Publication number: **0 109 305**
**B1**

(12) **EUROPEAN PATENT SPECIFICATION**

(45) Date of publication of patent specification: **27.07.88**

(21) Application number: **83306955.2**

(22) Date of filing: **14.11.83**

(51) Int. Cl.⁴: **B 32 B 27/36**

(54) Laminates and their use in making containers.

(30) Priority: **15.11.82 JP 198898/82**

(43) Date of publication of application:
**23.05.84 Bulletin 84/21**

(45) Publication of the grant of the patent:
**27.07.88 Bulletin 88/30**

(84) Designated Contracting States:
**BE DE GB NL SE**

(56) References cited:
**EP-A-0 035 835**
**EP-A-0 105 825**
**GB-A-1 337 331**

(73) Proprietor: **MITSUI PETROCHEMICAL**
**INDUSTRIES, LTD.**
**2-5, Kasumigaseki 3-chome Chiyoda-ku**
**Tokyo 100 (JP)**

(72) Inventor: **Yatsu, Tadao**
**69-14 Muroniki 4-chome**
**Iwakuni Yamaguchi-ken (JP)**
Inventor: **Hinooka, Nobuya**
**49-18 Hirata 6-chome**
**Iwakuni Yamaguchi-ken (JP)**

(74) Representative: **Perry, Robert Edward et al**
**GILL JENNINGS & EVERY 53-64 Chancery Lane**
**London WC2A 1HN (GB)**

## Description

This invention relates to laminates and their use in making bottles, e.g. by blow-moulding with biaxial orientation.

Biaxially-oriented, shaped articles of polyethylene terephthalate resin (hereinafter referred to as "PET") exhibit good mechanical strength, toughness, heat-resistance, chemical resistance, oil-resistance and transparency, and are widely used as packaging materials such as films, sheets and containers. However, containers of PET made by biaxially-orienting blow-moulding have drawbacks. For example, they cannot be sufficiently heat-set, and they do not sufficiently prevent gas permeation. Gas-permeability is apparently inherent in PET, and it has proved difficult to solve this problem by processing techniques.

With the object of reducing the gas-permeability properties of containers made of PET, PET has been laminated with a resin having a relatively low gas-permeability, such as polyvinylidene chloride, saponified ethylene-vinyl acetate copolymer or polyamide. None of these resins exhibits good adhesion to PET and, therefore, even a three-layered structure in which both outer layers are PET may be partially delaminated during orienting procedures or use, thereby increasing gas-permeability.

EP—A—0105825, published 18.04.84 (filing date 07.09.83, priority date 07.09.82), designating DE, FR, GB and NL, discloses bottles constructed from a two-layer laminate, both of which may be biaxially-oriented. One layer may be of PET and the other of polyisophthalate.

A bottle according to the present invention, preferably with the layers in ABA or BAB order, is constructed from a laminate of (A) a layer of a biaxially-oriented crystalline thermoplastic polyethylene terephthalate derived from a dicarboxylic acid component comprising at least 80 mol % terephthalic acid and a glycol component comprising at least 80 mol % ethylene glycol; and (B) a layer of a second polyester derived from a dicarboxylic acid component comprising more than 20 mol % isophthalic acid and a glycol component comprising at least 80 mol % ethylene glycol.

The PET used in the present invention is preferably a crystalline thermoplastic polyester resin in which at least 80, and preferably at least 90, mole % of the dicarboxylic acid component is terephthalic acid, and at least 80, preferably at least 90, mole % of the glycol component is ethylene glycol. Other dicarboxylic acids which can be used are aromatic dicarboxylic acids such as isophthalic acid, 4,4'-diphenyl ether dicarboxylic acid and 1,4- and 2,6-naphthalene dicarboxylic acids; aliphatic dicarboxylic acids such as oxalic acid, succinic acid, adipic acid, sebacic acid and undecanedicarboxylic acid; and cycloaliphatic dicarboxylic acids such as hexahydroterephthalic acid. Other glycols which can be used are aliphatic glycols such as propylene glycol, 1,4-butanediol and neopentyl glycol; cycloaliphatic glycols such as cyclohexanedimethanol; and aromatic dihydroxy compounds such as bisphenol A.

A PET layer may consist solely of a polyester as defined above, or it may comprise a mixture of PET and other polyesters. The polyester may be in the form of a copolymer. It is derived from terephthalic acid and ethylene glycol in the given amounts.

The polyester of a layer (B) is preferably a non-crystalline or low-crystalline polyester derived from a dicarboxylic acid component containing isophthalic acid in an amount exceeding 20, preferably at least 30, and more preferably at least 40, mole %; and a glycol component comprising ethylene glycol as at least its principal constituent. If the amount of isophthalic acid is not more than 20 mole %, there may be no worthwhile improvement in the product, in terms of reduction of gas-permeability. Examples of dicarboxylic acids, other than isophthalic acid, which can be present, are aromatic dicarboxylic acids such as terephthalic acid, 4,4'-diphenyldicarboxylic acid, 4,4'-diphenyl ether dicarboxylic acid and 1,4- and 2,6-naphthalenedicarboxylic acids, and the aliphatic and cycloaliphatic dicarboxylic acids given above.

The glycol component preferably comprises at least 80, and more preferably at least 90, mole % ethylene glycol. Examples of other glycols which can be used are the aliphatic glycols, cycloaliphatic glycols and aromatic dihydroxy compounds given above.

Typical examples of the second polyester are polyethylene isophthalate and a polyethylene isophthalate-polyethylene terephthalate copolymer in which the content of isophthalic acid in the dicarboxylic acid component exceeds 20 mole %. The molecular weight of this polyester is preferably such that the inherent viscosity $[\eta]$ measured in 1:1 (w/w) phenol/tetrachlorethane (at 25°C) is from 0.6 to 1.3 dl/g.

The glass-transition temperature (Tg) of the second polyester is preferably 55 to 90°C. A lower value indicates low heat-resistance, and a higher value means that the polyester may not be fully oriented when a laminate of the invention is subjected to biaxial orientation. The Tg values are measured using a DSC (differential scanning calorimeter) at a rate of 10 C degrees/min.

The materials in either or both layers of a laminate used in the invention may comprise additives which, of course, should not cause any subtantial deterioration in the properties of the laminate. Examples of additives are heat-stabilisers, agents intended to improve weatherability, lubricants, nucleating agents, pigments, dyestuffs and organic and inorganic fillers.

A bottle of the invention may comprise a layer (A) or a layer (B) at either or both faces. The laminate may be, for example, a tri-layer in ABA or BAB form. The laminate may also comprise four or more layers. If necessary or desired, an adhesive may be present between layers (A) and (B).

The thickness of the individual layers is not usually critical. A layer (A) may be 100 to 600, more preferably 200 to 500, μm. The thickness of a layer (B) may be from 10 to 350, more preferably 60 to 200, μm. The usual total thickness of a laminate used in the invention is 200 to 700, more preferably 300 to 600,

**0 109 305**

μm. These values may be appropriate to a blank, preform or moulded bottle.

A bottle of the invention can be made by a conventional method for biaxially-orienting blow-moulding PET. For example, a multi-layer preform may be prepared by injection-moulding using an injection-moulding machine which may have, for example, a plurality of injection points, or by extruding, and then end-closing, a multi-layer tube; and blow-moulding the preform at from 90 to 130°C, using a rod to cause a 1.5 to 2.5 drawing factor in the axial direction and air to cause a 2 to 5 drawing factor in the radial direction. The procedure may use a hot preform or be a two-stage method using a cold preform. In a bottle produced by this procedure, it may be in a form of a laminate throughout, or only in the part under the neck.

It is preferred, however, to make a bottle by a method according to the present invention, in which layers (A) and (B) as defined above, at 230 to 350°C and 180 to 260°C, respectively, are laminated under a pressure (gauge) of at least 1960 kPa (20 kg/cm$^2$); cooling the laminate to −10 to 30°C to give a preform; and biaxially-orienting and blow-moulding the preform at 80 to 130°C at drawing factors of at least 1.5 in the axial direction and at least 2 in the radial direction. This procedure can give blow-moulded products which have, in addition to low gas-permeability, high impact strength.

In the given temperature ranges, the molten PET and the second polyester have melt viscosities suitable for processing. The laminating pressure enhances the impact strength of the product. The drawing temperature is chosen with regard to the fact that drawing at lower than 80°C decreases clarity, while drawing above 130°C causes uneven thickness in the product. The drawing ratios provide the desired low gas-permeability and high impact strength.

Various methods may be used to prepare the preform. For example, the polyesters may be melted in separate extruders, and the melts fed to a co-extrusion die from which a multi-layer tube is extruded under a pressure of at least 1960 kPa (20 kg/cm$^2$), and processing the ends of an extrusion product, after cooling, to form a bottom and bottle mouth. Alternatively, the polyesters may be melted and separately injected into a single mould.

Bottles of the invention are very suitable for containing beverages such as beer, soft drink and fruit juice. They can have better properties, and/or be processed more easily, than comparable known products.

The following Examples illustrate the invention. In these Examples, the polyethylene terephthalates respectively denoted as PET-1, PET-2 and PET-3 are products made by the Applicants and known as "PET J-025", "Mitsui PET J-055" and "Mitsui PET J-135", respectively. "PEI" refers to polyethylene isophthalate (Tg 62°C, η 0.83 dl/g).

### Example 1

PET-1 was injection-moulded, to give a moulded article. PEI was then injection-moulded onto the article, to give a preform. Using an infra-red heating device, the preform was heated to 85 to 95°C, and the heated preform was blow-moulded, using an orienting blow-moulding apparatus to give axial and radial drawing factors of 2.5 and 4.3, respectively, to give a bottle having a volume of about 1 litre with a PET layer about 150 μm thick and a PEI layer about 150 μm at its thinnest point.

### Control 1

The procedure of Example 1 was followed, to give a preform and bottle of substantially the same dimensions, but of PET only (minimum thickness of bottle 300 μm).

### Examples 2 to 4

The procedure of Example 1 was followed, in each of three Examples, to give a preform and bottle of substantially the same dimensions, except that PEI was replaced by three different polyethylene isophthalate/polyethylene terephthalate copolymers. The respective mol percentages in the Examples were 70 and 30 (Tg 64°C, η 0.80 dl/g), 50 and 50 (Tg 65°C, η 0.78 dl/g) and 30 and 70 (Tg 67°C, η 0.78 dl/g).

### Control 2

The procedure of Example 1 was followed, to give a preform and bottle of substantially the same dimensions, but the PEI was replaced by a copolymer of 10 mol % polyethylene isophthalate and 90 mol % polyethylene terephthalate (Tg 69°C, η 0.75 dl/g).

### Example 5

The procedure of Example 1 was followed, to give a preform and bottle of substantially the same dimensions, except that the order of injection was changed and, instead of PEI, the copolymer of Example 2 was used.

### Example 6

PET-2 was dried at 150°C for 3 hours and melted in a 90 mm diameter extruder at 280°C. PEI was dried at 50°C for 24 hours and melted in another, 40 mm diameter, extruder at 230°C. The melted resins were fed to a ring die and extruded at a temperature of 230°C and a pressure (gauge) of 7845 kPa (80 kg/cm$^2$), to give a three-layered tube of the structure PET-2/PEI/PET-2 (1.2/1.2/1.2 mm thick). The extruded tube was cooled with water at 10°C, to a 24.8 mm outer diameter and 3.6 mm thickness. The tube was cut to a suitable length; one end was closed by heating, and the other end was shaped into the mouth of a bottle, again by heating. The preform was 16.5 cm long and 50 g in weight.

3

0 109 305

The preform was then blow-moulded with a biaxially-orienting blow-moulding machine (available as "LB-01" made by Corpoplast). The conditions were: blowing air pressure 2450 kPa (25 kg/cm²); preform heating period 15 seconds; drawing temperature 115°C; biaxial drawing 2.5 times in the axial direction and 4 times in the radial direction. A multi-layered bottle was formed; content 1.5 litre; PET-2/PEI/PET-2=120/120/120 µm.

Control 3
The procedure of Example 6 was followed, except that the pressure was reduced from 7845 to 980 kPa (80 to 10 kg/cm²).

Example 7
PET-3 was dried at 150°C for 3 hours. PEI was dried at 50°C for 24 hours. The materials were melted at 280°C and 210°C, respectively, injection-moulded using an injection-moulding machine equipped with a single preform mould, and cooled at 10°C under a pressure of 19600 kPa (200 kg/cm²) to form a two-layer preform 28.4 mm in outer diameter and 3.2 mm thick, having inner and outer layers of PET-3 and PEI each 1.6 mm thick. The preform was blow-moulded using the same apparatus and conditions as in Example 6, to give a 1 litre bottle, each layer 150 µm thick.

Control 4
The procedure of Example 7 was followed, to give a preform and bottle of substantially the same dimensions, except that PEI was injection-moulded, in a larger mould, onto a PET-3 injection-moulded article.

The oxygen gas and carbon dioxide gas permeabilities of the products of each of the Examples and Controls was measured with, respectively, Oxtran and Permatran C-IV both made by Mocon. The results are shown in Table 1.

TABLE 1

| Example | $O_2$ permeability (ml/day. bottle. atm.) | $CO_2$ permeability (ml/day. bottle. atm.) |
|---|---|---|
| 1 | 0.08 | 1.5 |
| C1 | 1.10 | 4.0 |
| 2 | 0.12 | 2.3 |
| 3 | 0.31 | 2.7 |
| 4 | 0.52 | 3.2 |
| C2 | 0.85 | 3.6 |
| 5 | 0.13 | 2.0 |
| 6 | 0.14 | 2.0 |
| C3 | 0.16 | 2.1 |
| 7 | 0.09 | 0.8 |
| C4 | 0.10 | 0.8 |

The products of Examples 6 and 7 and Controls 3 and 4 were tested for strength, by filling each bottle with water at 0°C, and then dropping the filled bottle from a certain height. The results are given in Table 2.

4

# 0 109 305

### TABLE 2

| Example | Strength properties |
|---------|---------------------|
| 6 | neither breakage nor delamination up to 2.0 m. |
| C3 | damage from less than 1 m. |
| 7 | destruction, but no delamination, from 1.4 m. |
| C4 | easily destroyed |

**Claims for the Contracting States: BE, SE**

1. A bottle constructed from a laminate of (A) a layer of a biaxially-oriented crystalline thermoplastic polyethylene terephthalate derived from a dicarboxylic acid component comprising at least 80 mol % terephthalic acid and a glycol component comprising at least 80 mol % ethylene glycol; and (B) a layer of a second polyester derived from a dicarboxylic acid component comprising more than 20 mol % isophthalic acid and a glycol component comprising at least 80 mol % ethylene glycol.

2. A bottle according to claim 1, in which the laminate comprises another layer A or B, the layers being in ABA or BAB order.

3. A method of making a bottle, which comprises:
forming a laminate from a melt of polyethylene terephthalate as defined in claim 1, at 230 to 350°C, and a melt of a second polyester as defined in claim 1, at 180 to 260°C, under a pressure (gauge) of at least 1960 kPa (20 kg/cm²);
cooling and solidifying the melt to from −10 to 30°C, to give a preform; and
biaxially-orienting and blow-moulding the preform at 80 to 130°C with axial and radial drawing factors of at least 1.5 and 2, respectively.

**Claims for the Contracting States: DE, GB, NL**

1. A bottle constructed from a laminate of layers in ABA or BAB order, in which A is a layer of a biaxially-oriented crystalline thermoplastic polyethylene terephthalate derived from a dicarboxylic acid component comprising at least 80 mol % terephthalic acid and a glycol component comprising at least 80 mol % ethylene glycol; and B is a layer of a second polyester derived from a dicarboxylic acid component comprising more than 20 mol % isophthalic acid and a glycol component comprising at least 80 mol % ethylene glycol.

2. A method of making a bottle, which comprises:
forming a laminate from a melt of polyethylene terephthalate as defined in claim 1, at 230 to 350°C, and a melt of a second polyester as defined in claim 1, at 180 to 260°C, under a pressure (gauge) of at least 1960 kPa (20 kg/cm²);
cooling and solidifying the melt to from −10 to 30°C, to give a preform; and
biaxially-orienting and blow-moulding the preform at 80 to 130°C with axial and radial drawing factors of at least 1.5 and 2, respectively.

**Patentansprüche für die Vertragsstaaten: BE, SE**

1. Flasche, hergestellt aus einem Schichtstoff aus (A) einer Schicht von biaxial orientiertem, kristallinem, thermoplastischem Polyethylenterephthalat, welches sich von einer Dicarbonsäure-Komponente, die mindestens 80 Mol-% Terephthalsäure umfasst und einer Glykolkomponente, die mindestens 80 Mol-% Ethylenglykol umfasst, ableitet und (B) einer Schicht aus einem zweiten Polyester, der sich von einer Dicarbonsäure-Komponente, welche mehr als 20 Mol-% Isophthalsäure umfasst, und einer Glykolkomponente, welche mindestens 80 Mol-% Ethylenglykol umfasst, ableitet.

2. Flasche nach Anspruch 1, wobei der Schichtstoff eine weitere Schicht A oder B umfasst, wobei die Schichten in ABA- oder BAB-Reihenfolge sind.

3. Verfahren zur Herstellung einer Flasche, welches umfasst:
Herstellen eines Schichtstoffes aus einer Schmelze eines Polyethylenterephthalats nach Anspruch 1 bei 230 bis 350°C und aus einer Schmelze eines zweiten Polyesters nach Anspruch 1 bei 180 bis 260°C und einem Druck (Manometer) von mindestens 1960 kPa (20 kg/cm²);

5

Abkühlen und Verfestigen der Schmelze unter Bildung eines Vorformlings bei −10 bis 30°C, und biaxiales Recken und Blasformen des Vorformlings bei 80 bis 130°C mit axialen und radialen Ziehfaktoren von mindestens 1,5 beziehungsweise 2.

**Patentansprüche für die Vertragsstaaten: DE, GB, NL**

1. Flasche, hergestellt aus einem Schichtstoff von Schichten in ABA- oder BAB-Reihenfolge, wobei A eine Schicht aus biaxial orientiertem kristallinem, thermoplastischem Polyethylenterephthalat ist, welches sich von einer Dicarbonsäure-Komponente, die mindestens 80 Mol-% Terephthalsäure umfasst, und einer Glykolkomponente, die mindestens 80 Mol-% Ethylenglykol umfasst, ableitet und B eine Schicht aus einem zweiten Polyester ist, der sich von einer Dicarbonsäure-Komponente, welche mehr als 20 Mol-% Isophthalsäure umfasst, und einer Glykolkomponente, welche mindestens 80 Mol-% Ethylenglykol umfasst, ableitet.

2. Verfahren zur Herstellung einer Flasche, welches umfasst:
Herstellen eines Schichtstoffes aus einer Schmelze eines Polyethylenterephthalats nach Anspruch 1 bei 230 bis 350°C und aus einer Schmelze eines zweiten Polyesters nach Anspruch 1 bei 180 bis 260°C und einem Druck (Manometer) von mindestens 1960 kPa (20 kg/cm²);
Abkühlen und Verfestigen der Schmelze unter Bildung eines Vorformlings bei −10 bis 30°C, und biaxiales Recken und Blasformen des Vorformlings bei 80 bis 130°C mit axialen und radialen Ziehfaktoren von mindestens 1,5 beziehungsweise 2.

**Revendications pour les états Contractants: BE, SE**

1. Une bouteille construite à partir d'un laminé de (A) une couche de téréphtalate de polyéthylène thermoplastique cristallin à orientation biaxiale dérivé d'un composé d'acide bicarboxylique comprenant de l'acide téréphtalique d'au moins 80% de mole et un composé de glycol comprenant de l'éthylène glycol d'au moins 80% de mole; et de (B) une couche d'un deuxième polyester dérivé d'un composé d'acide bicarboxylique comprenant de l'acide isophtalique d'au moins 20% de mol et un composé de glycol comprenant de l'éthylène glycol d'au moins 80% de mole.

2. Une bouteille, selon la revendication 1, où le laminé comprend une autre couche A ou B et où les couches sont dans l'ordre ABA ou BAB.

3. Une méthode de fabrication de bouteille qui comprend:
la formation d'un laminé d'une fusion de téréphthalate de polyéthylène, comme défini à la revendication 1, à une température entre 230° et 350°C et une fusion d'un deuxième polyester comme défini à la revendication 1, à une température entre 180° et 260°C, à une pression (manomètre) d'au moins 1960 kPa (20 kg/cm²)
le refroidissement et la solidification de la fusion entre −10° et 30°C afin de donner un préfaçonnage et l'orientation biaxiale et moulage par soufflage du préfaçonnage à une température entre 80° et 130°C avec facteurs de tirage axial et radial d'au moins 1,5 et 2 respectivement.

**Revendications pour les états Contractants: DE, GB, NL**

1. Une bouteille construite à partir d'un laminé de couches dans l'ordre ABA ou BAB où A est une couche de téréphtalate de polyéthylène thermoplastique cristallin à orientation biaxiale dérivé d'un composé d'acide bicarboxylique comprenant de l'acide téréphtalique d'au moins 80% de mole et un composé de glycol comprenant de l'éthylène glycol d'au moins 80% de mole, et B une couche d'un deuxième polyester dérivé d'un composé d'acide bicarboxylique comprenant de l'acide isophtalique d'au moins 20% de mole et un composé de glycol comprenant de l'éthylène glycol d'au moins 80% de mole.

2. Une méthode de fabrication de bouteille qui comprend:
la formation d'un laminé d'une fusion de téréphtalate de polyéthylène, comme défini à la revendication 1, à une température entre 230° et 350°C et une fusion d'un deuxième polyester comme défini à la revendication 1, à une température entre 180° et 260°C, à une pression (manomètre) d'au moins 1960 kPa (20 kg/cm²)
le refroidissement et la solidification de la fusion entre −10 et 30°C afin de donner un préfaçonnage et l'orientation biaxiale et moulage par soufflage du préfaçonnage à une température entre 80° et 130°C avec facteurs de tirage axial et radial d'au moins 1,5 et 2 respectivement.